# FASCICULE DE BREVET EUROPEEN

(11) **EP 2 829 437 B1**
(45) Date de publication et mention de la délivrance du brevet: **30.03.2016**
(21) Numéro de dépôt: 14178541.0
(22) Date de dépôt: 25.07.2014
(51) Int. Cl.: B60N 2/28, B60N 2/26, B60R 22/10

(54) **Siège auto pour enfant, destiné à être solidarisé au siège d'un véhicule automobile**
Kinderautositz, der mit dem Fahrzeugsitz fest verbunden werden kann
Car seat for a child, intended for being secured to the seat of a motor vehicle

(30) Priorité: 25.07.2013 FR 1357342
(43) Date de publication de la demande: 28.01.2015
(73) Titulaire: Dorel France SA, 49309 Cholet Cedex (FR)
(72) Inventeur: Naslain, Yann, 49300 Cholet (FR); Gagnade, Philippe, 49300 Cholet (FR)
(74) Mandataire: Vidon Brevets & Stratégie

(56) Documents cités:
- WO-A1-98/18649
- WO-A1-2008/121148
- WO-A1-2011/031162
- JP-A- 2001 158 263
- US-A1- 2007 228 802

## Description

### 1. Domaine de l'invention

Le domaine de l'invention est celui de la puériculture. Plus précisément, l'invention concerne les sièges pour enfants destinés à être installés dans un véhicule automobile et appelés généralement dispositifs de retenue pour enfant en voiture. En particulier, l'invention s'applique aux sièges pour enfant du groupe 0 ou 0+ ou 0+1 ou 1/2 selon la terminologie réglementaire, du type comportant une structure comprenant au moins une assise, un dossier et une têtière, le siège comprenant également un harnais de sécurité indépendant de la ceinture de sécurité du véhicule automobile.

L'invention concerne notamment la mise en oeuvre d'un tel harnais, et en particulier d'une part la sécurité de l'enfant et d'autre part l'ergonomie de mise en oeuvre.

### 2. Art antérieur

Un tel siège pour enfant est destiné à être utilisé pendant une période relativement importante de la vie d'un enfant par rapport notamment à l'évolution de sa morphologie et/ou par différents enfants.

Il est donc nécessaire que ce siège puisse évoluer et/ou être adapté à l'enfant transporté. Une telle adaptabilité est également souhaitable pour tenir compte de la façon dont l'enfant est habillé.

Notamment, les bretelles du harnais de sécurité doivent être correctement placées au niveau des épaules quelle que soit la taille de l'enfant. Pour cela, deux fentes peuvent être réalisées dans une pièce solidaire de la têtière, de façon que les bretelles soient déplacées simultanément avec la têtière, lorsque celle-ci est réglable.

Des fourreaux sont parfois prévus sur les bretelles. Ces fourreaux consistent par exemple en des manchons agencés pour venir entourer les bretelles du harnais de sécurité sur une portion de celles-ci, notamment au niveau du torse et des épaules de l'enfant. Les fourreaux sont généralement réalisés en tissu recouvrant une mousse et, pour une partie destinée à venir en contact avec l'enfant, en un matériau à fort coefficient de frottement adhérant au vêtement de l'enfant, ce qui permet une meilleure retenue de l'enfant, notamment lors d'un accident.

Le bon placement de ces fourreaux n'est pas toujours aisé, alors qu'il s'agit d'un aspect essentiel, pour le confort et la sécurité de l'enfant.

Par ailleurs, l'installation de l'enfant dans le siège, et notamment la mise en place du harnais est souvent difficile. Tout d'abord, les bretelles non utilisées lorsque le siège est vide, reposent généralement sur l'assise, et l'enfant se retrouve assis dessus lorsqu'on le place dans le siège.

Pour éviter ce problème, il a été proposé de placer des crochets sur les côtés du siège, permettant d'y glisser les bretelles pendant l'installation de l'enfant. Cette approche est intéressante, mais souvent non utilisée, ou peu pratique à utiliser. L'utilisation de ces crochets peut ne pas être intuitive, pour un utilisateur, ou apparaître peu aisée, du fait notamment de l'épaisseur formée par le fourreau, qu'il est difficile de glisser dans un crochet.

Le harnais doit en outre être bien installé, et donc convenablement serré, pour assurer la sécurité de l'enfant. Pour ceci, après avoir solidarisé les bretelles et une patte d'entrejambes, à l'aide de moyens de verrouillage adaptés, l'utilisateur doit tendre l'ensemble, à l'aide d'un brin libre de la sangle de patte d'entrejambe circulant dans un dispositif de tension à cliquet (ou des moyens similaires). Ce brin libre s'étend généralement dans la face avant de l'assise. Un bouton de libération du dispositif de tension est placé sur la surface de l'assise, par exemple au voisinage du passage de la patte d'entrejambe.

Il existe un risque que le dispositif de tension se bloque, et ne permette plus le déverrouillage, ou, plus dangereux, ne permette pas d'obtenir une tension suffisante pour assurer la sécurité de l'enfant.

Le document WO 2008/121148 prévoit un bouton de libération placé au voisinage de la patte d'entrejambe permettant d'actionner un dispositif de tension. Un tel bouton de libération est classiquement rigide, et un faible espace existe entre le bouton et l'ouverture dans laquelle il circule. En conséquence des poussières ou du liquide peuvent pénétrer dans le dispositif de tension.

### 3. Objectifs de l'invention

Il existe donc un besoin pour améliorer la sécurité et/ou le confort de l'enfant assis dans le siège.

Il existe notamment un besoin pour faciliter la manipulation, l'utilisation et/ou la sécurité du harnais d'un tel siège.

### 4. Exposé de l'invention

Ces objectifs, ainsi que d'autres qui apparaîtront plus clairement par la suite sont atteints à l'aide d'un siège auto pour enfant, destiné à être installé dans un véhicule, notamment automobile, équipé d'un harnais de sécurité destiné à maintenir un enfant assis dans le siège, comprenant deux bretelles et une patte d'entrejambe, un moyen de libération dudit harnais étant prévu, au voisinage de ladite patte d'entrejambe, dans une ouverture ménagée à la surface de ladite assise.

Selon l'invention, ladite ouverture est fermée par un élément souple scellé sur les bords de ladite ouverture, ledit élément souple étant préformé, pour définir une surface d'appui, coopérant avec une partie supérieure dudit moyen de libération.

Ainsi, le système de déverrouillage est sécurisé, tout en étant ergonomique et configurable en fonction des besoins. Le montage est simple, et le coût réduit, et l'utilisation d'un élément souple préformé permet de proposer une forme adaptée en fonction des besoins, de façon simple et efficace.

Ledit élément souple peut notamment être collé et/ou clippé sur les bords de ladite ouverture.

Selon un aspect particulier de l'invention, chacune desdites bretelles porte un fourreau relié au siège par l'intermédiaire d'un élément de retenue, ledit élément de retenue se prolongeant sur et/ou dans ledit fourreau pour former une couche de friction recouvrant une partie de la surface dudit fourreau en contact avec ledit enfant.

Ceci permet d'améliorer la sécurité, en garantissant le bon placement du fourreau en cas de choc. Le même élément sert au maintien du fourreau le long de la bretelle à la bonne hauteur et à la friction sur les vêtements de l'enfant.

Selon différents modes de réalisation, la portion dudit élément de retenue formant couche de friction est solidarisée audit fourreau par couture, collage et/ou thermosoudage.

Selon encore un aspect particulier de l'invention, lesdites bretelles sont chacune munie d'un premier élément d'accrochage apte à coopérer avec un second élément d'accrochage complémentaire, prévu à cet effet sur ledit siège, pour maintenir lesdites bretelles écartées lorsqu'elles ne sont pas utilisées.

Cette approche est plus ergonomique et facile à utiliser, par rapport aux dispositifs à base de crochets, dont la fonction et l'utilisation ne sont pas toujours claires pour les utilisateurs. En prévoyant un élément spécifique sur chaque fourreau, on supprime ces possibles ambiguïtés.

Notamment, lesdits premiers éléments d'accrochage peuvent comprendre chacun au moins une boutonnière formée sur un fourreau monté sur la bretelle, et lesdits seconds éléments d'accrochage au moins un plot, apte à coopérer avec l'une desdites boutonnières.

De telles boutonnières peuvent par exemple être formées par un fil cousu sur un bord du fourreau correspondant, le cas échéant élastique.

Selon une autre mise en oeuvre, lesdites bretelles peuvent être munies d'un premier et d'un second moyens de verrouillage complémentaires, solidarisant les deux bretelles l'une avec l'autre, et lesdits premier et d'un second moyens de verrouillage forment également lesdits premiers éléments d'accrochage.

Lesdits éléments de verrouillage peuvent notamment être formés par des éléments souples solidarisés chacun à un fourreau porté par une desdites bretelles.

### 5. Liste des figures

D'autres buts, caractéristiques et avantages de l'invention apparaîtront à la lecture de la description suivante, donnée à titre indicatif uniquement, et non limitatif, et qui se réfèrent aux figures annexées dans lesquelles :
- la figure 1 est une vue schématique de trois quarts d'un siège auto selon un mode de réalisation de l'invention ;
- les figures 2A et 2B sont deux vues de l'élément souple du bouton de libération du siège de la figure 1, et de son support ;
- la figure 3 est une vue schématique en coupe d'un des fourreaux du siège de la figure 1, selon un mode de réalisation de l'invention.

### 6. Description détaillée d'un mode de réalisation de l'invention

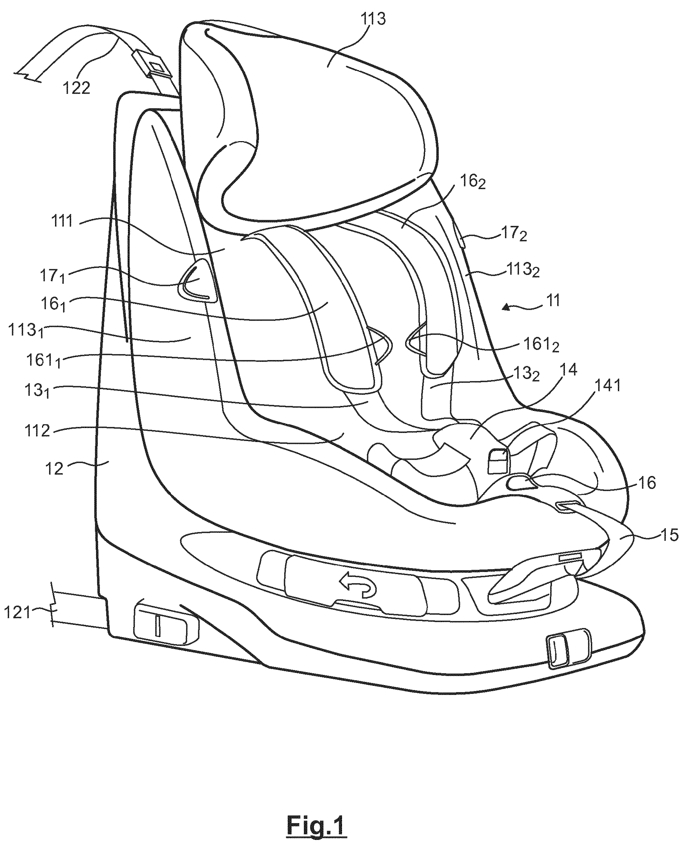

L'invention propose donc une amélioration des harnais d'un siège-auto, en ce qui concerne la sécurité de l'enfant transporté, son confort d'installation et/ou l'ergonomie de manipulation de ce harnais. La figure 1 présente un exemple de siège auto mettant en oeuvre un tel harnais selon l'invention.

Ce siège 11 est ici monté sur une embase 12, muni de crochets 121 de fixation répondant à la norme Isofix^{®}, et d'une sangle 122 anti-basculement. Bien sûr, l'invention s'applique plus généralement à tout type de siège, avec ou sans embase, et avec des moyens de solidarisation aux véhicules par crochets Isofix^{®} ou similaires, ou via une ceinture de sécurité du véhicule.

Le siège 11 comprend un dossier 111 et une assise 112, et des bords latéraux 113₁ et 113₂ s'étendant vers l'avant du siège, depuis le dossier. Le dossier 111 porte une têtière 113, pouvant être réglée en hauteur, par rapport à ce dossier 111.

Le harnais est un harnais "cinq points", comprenant deux bretelles 13₁ et 13₂, et une patte d'entrejambe 14. Dans ce mode de réalisation, la patte d'entrejambe 14 comprend un élément rigide articulé sur l'assise, portant des moyens de réception de crochets montés sur les bretelles (non visibles sur la figure, car présentés en position verrouillée). Un bouton 141 permet de libérer ces crochets, et d'écarter les bretelles 13₁ et 13₂. Selon d'autres modes de réalisation, la patte d'entrejambe peut être une sangle souple.

Pour assurer un serrage suffisant du harnais, une sangle de serrage 15 s'étend dans le prolongement de la patte d'entrejambe 14. Il s'agit d'un brin de sangle libre, circulant sous l'assise 112, et débouchant sur la face avant de cette assise. Ainsi, classiquement, après que les bretelles 13₁ et 13₂ sont verrouillées à la patte d'entrejambe 14, l'utilisateur tire sur cette sangle de serrage 15. Un mécanisme de maintien en tension (non représenté), mettant par exemple en oeuvre un système à cliquet, est prévu dans l'assise, pour maintenir l'ensemble du harnais serré, selon la tension impliquée par l'utilisateur à la sangle de serrage 15.

Pour libérer le harnais, et sortir l'enfant du siège, il est donc nécessaire de détendre la sangle 15, et donc de libérer le système à cliquet. Pour ceci, un bouton de libération 16 est prévu. Selon l'art antérieur, une ouverture est ménagée dans l'assise 111, et le bouton monté sur le système de tension traverse cette ouverture. Cette approche présente plusieurs inconvénients.

Tout d'abord, il est nécessaire de prévoir un certain jeu, entre le bouton et les bords de l'ouverture. De ce fait, des poussières, des miettes ou de petits objets peuvent pénétrer à l'intérieur de l'assise, et le cas échéant bloquer le système à cliquets, ou à tout le moins perturber son fonctionnement, que ce soit pour serrer ou desserrer. Ceci est non seulement gênant, sur le terrain de l'ergonomie, mais également potentiellement dangereux.

Par ailleurs, il est nécessaire de concevoir un bouton de forme particulière, coïncidant avec l'ouverture et la surface de l'assise.

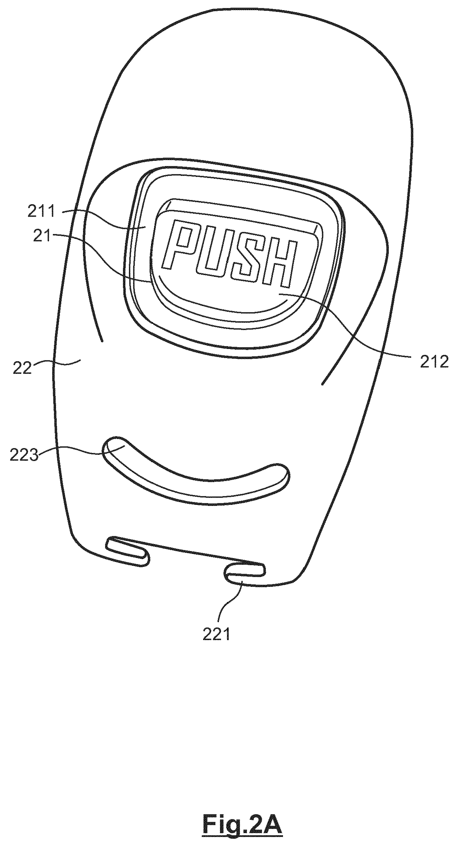

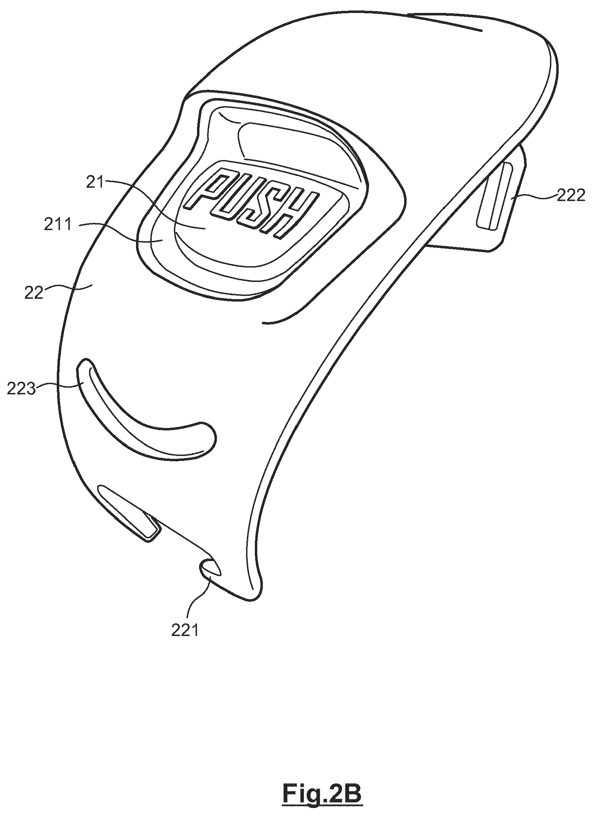

Selon l'invention, une nouvelle approche est proposée : le bouton est recouvert d'un élément souple 21, comme illustré sur les figures 2A et 2B.

Dans le mode de réalisation illustré par ces figures 2A et 2B, cet élément souple 21 est monté sur un support 22, destiné à être lui-même monté sur la surface de l'assise 111. Dans d'autres modes de réalisation, l'élément souple 21 pourrait être monté directement sur la surface de l'assise, sous réserve que celle-ci soit préformée en conséquence.

Le support 22 comprend, dans ce mode de réalisation, des zones 221 et 222 de solidarisation à l'assise, ainsi qu'une fente 223 permettant le passage du brin de serrage 15.

L'élément souple 21 est solidarisé par ces bords 211 aux bords de l'ouverture ménagée dans le support 21. Cette solidarisation peut se faire par collage, thermosoudage, clippage, ... Ainsi, l'intérieur de l'assise est parfaitement isolé de l'extérieur, et le risque qu'un petit élément pénètre à l'intérieur, et perturbe le fonctionnement du système à cliquet, est supprimé, ou à tout le moins fortement réduit.

Par ailleurs, cette approche permet de simplifier la réalisation et le montage du système à cliquet proprement dit, puisque la surface supérieure de l'actionneur de libération (non représentée) est recouverte par l'élément souple 21. Comme on le voit sur les figures 2A et 2B, la surface de cet élément 21 peut être préformée, pour définir une surface d'appui 212, recouvrant cet actionneur.

Cet élément souple 21, réalisé par exemple en caoutchouc ou en matière plastique, est particulièrement simple et peu coûteux à fabriquer, par exemple par moulage. Ce moulage peu être adapté, pour rendre plus explicite son utilisation, par exemple avec un symbole, ou une mention telle que "PUSH", comme illustrée sur les figures.

Il peut en outre être réalisé dans une matière fluorescente, pour faciliter l'utilisation, notamment de nuit.

Pour améliorer la sécurité et l'utilisation du harnais, il est par ailleurs souhaitable que les fourreaux 16₁ et 16₂, montés sur les bretelles 13₁ et 13₂ pour recouvrir les épaules et la partie supérieure du thorax de l'enfant, restent bien placés, quelle que soit la taille de l'enfant, et donc quelle que soit la position de la têtière 113, par rapport au dossier 111. Pour cela, il est généralement prévu un lien, ou un élément de retenue, reliant la partie supérieure du fourreau à un élément solidaire de la têtière.

Par ailleurs, pour que ces fourreaux assurent au mieux leur fonction de sécurité, en cas de choc, on prévoit généralement un élément à fort coefficient de friction, sur la surface du fourreau venant en contact avec les habits de l'enfant.

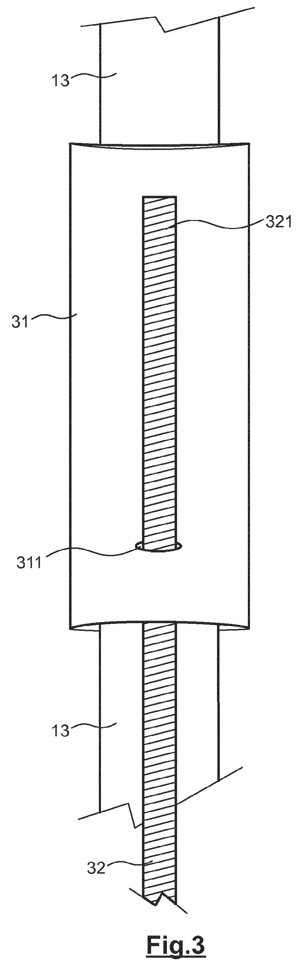

L'invention propose, selon un aspect particulier, pouvant le cas échéant être mis en oeuvre indépendamment, de combiner ces deux fonctions, comme illustré sur la figure 3. Sur cette figure, on a représenté la face 113 du fourreau destinée à venir en contact avec l'enfant. Ainsi, le lien de retenue est remplacé par une bande souple 32, faisant par exemple entre 5 et 20 mm de large, réalisée dans une matière présentant un coefficient de friction suffisamment important, par exemple en tissu.

Son extrémité supérieure (non représentée) est classiquement solidarisée à un élément lié à la têtière. Elle pénètre par ailleurs à l'intérieur du fourreau 16₁, de même que la bretelle 13. Une ouverture 311 est ménagée dans la surface du fourreau 16₁, pour permettre le passage de la bande 32, dont une portion 321 se trouve ainsi sur la surface du fourreau 31. Cette portion 321 venant sur le fourreau est solidarisée à celui-ci, par collage, thermosoudage et/ou couture, de façon à assurer une friction efficace avec les vêtements de l'enfant, en cas de besoin.

Selon encore un autre aspect particulier de l'invention, pouvant le cas échéant être mis en oeuvre indépendamment, des moyens spécifiques sont prévus pour maintenir les bretelles 13₁ et 13₂ écartées de la zone d'installation de l'enfant. Pour ceci, les fourreaux 16₁ et 16₂ (figure 1) sont munis de boutonnières 161₁ et 161₂, aptes à coopérer avec des boutons complémentaires 17₁, 17₂, prévus à cet effet sur les bords latéraux 113₁ et 113₂.

Ces boutons 17₁ et 17₂ sont placés sensiblement à l'emplacement où l'on prévoit généralement des crochets. Ils présentent une portion d'accrochage, ici de section sensiblement triangulaire (mais pouvant prendre tout autre forme adéquate), montés sur un tronc, pour définir l'équivalent d'un bouton apte à coopérer avec les boutonnières 161₁ et 161₂.

Cette approche diffère de celle, classique, des crochets, ou d'autres éléments similaires, en ce que l'on a ajouté aux fourreaux 16₁ et 16₂ des éléments spécifiques et visibles, à savoir les boutonnières 161₁ et 161₂. Ainsi, l'utilisateur comprend intuitivement l'utilisation de ces moyens.

Cette utilisation est par ailleurs beaucoup plus facile que celle des crochets, dans lesquelles doivent être glisser les bretelles et les fourreaux. En effet, les boutonnières 161₁ et 161₂ sont bien visibles, et placées sur un bord des fourreaux (de façon que les deux boutonnières soient orientées l'une vers l'autre, lorsque les bretelles sont dans la position illustrée sur la figure 1), ce qui conduit à une position relativement naturelle et ergonomique, lorsque les boutonnières sont solidarisées aux boutons 17₁ et 17₂.

Pour faciliter l'utilisation, ces boutonnières peuvent par ailleurs être réalisées dans un fil légèrement élastique.

Par ailleurs, afin de faciliter encore l'utilisation, et la rendre plus intuitive, les boutonnières 161₁ et 161₂, d'une part, et les boutons 17₁ et 17₂, d'autre part, peuvent être réalisées dans une couleur distinctive, par exemple en orange ou en rouge.

Selon un autre mode de réalisation, les bretelles sont équipées chacune d'un élément de liaison souple, pouvant être solidarisés l'un à l'autre à l'aide d'un premier et d'un second moyens de verrouillage complémentaires, permettant notamment d'empêcher que l'enfant puisse écarter les bretelles et se dégager du harnais.

Cette approche, connue en elle-même notamment sous la désignation anglaise « chest clip », peut être utilisée pour mettre en oeuvre cet aspect de l'invention. Pour ceci, les plots sont remplacés par des moyens de verrouillage complémentaires pouvant coopérer avec les moyens de verrouillage de ce « chest clip ». Ainsi, le fourreau portant les moyens de verrouillage mâles (respectivement femelles) peuvent être solidarisés à des moyens de verrouillage femelles (respectivement mâles) portés par l'autre fourreau, pour solidariser les deux fourreaux, ou à des moyens de verrouillage femelles (respectivement mâles) portés par un des bords latéraux du siège, pour écarter les deux bretelles pendant le retrait et l'installation de l'enfant. Cette approche est très intuitive pour les utilisateurs, et facile à mettre en oeuvre.

## Revendications

1. Siège pour enfant destiné à être installé dans un véhicule, notamment automobile, équipé d'un harnais de sécurité destiné à maintenir un enfant assis dans le siège, comprenant deux bretelles (13₁, 13₂) et une patte d'entrejambe (14),
un moyen de libération (16) dudit harnais étant prévu, au voisinage de ladite patte d'entrejambe (14), dans une ouverture ménagée à la surface de ladite assise, **caractérisé en ce que** ladite ouverture est fermée par un élément souple (21) scellé sur les bords de ladite ouverture, ledit élément souple étant préformé, pour définir une surface d'appui (212), coopérant avec une partie supérieure dudit moyen de libération (16).

2. Siège selon la revendication 1, **caractérisé en ce que** ledit élément souple (21) est collé et/ou clippé sur les bords de ladite ouverture.

3. Siège selon l'une quelconque des revendications 1 et 2, **caractérisé en ce que** chacune desdites bretelles (13) porte un fourreau (31) relié au siège par l'intermédiaire d'un élément de retenue (32), ledit élément de retenue se prolongeant sur et/ou dans ledit fourreau (31) pour former une couche de friction recouvrant une partie de la surface dudit fourreau en contact avec ledit enfant.

4. Siège selon la revendication 3, **caractérisé en ce que** la portion (321) dudit élément de retenue (31) formant couche de friction est solidarisée audit fourreau (31) par couture, collage et/ou thermosoudage.

5. Siège selon l'une quelconque des revendications 1 à 4, **caractérisé en ce que** lesdites bretelles (13₁, 13₂) sont chacune munie d'un premier élément d'accrochage (161₁, 161₂) apte à coopérer avec un second élément d'accrochage complémentaire (17₁, 17₂), prévu à cet effet sur ledit siège, pour maintenir lesdites bretelles écartées lorsqu'elles ne sont pas utilisées.

6. Siège selon la revendication 5, **caractérisé en ce que** lesdits premiers éléments d'accrochage (161₁, 161₂) comprennent chacun au moins une boutonnière formée sur un fourreau monté sur la bretelle,
et **en ce que** lesdits seconds éléments d'accrochage (17₁, 17₂) comprennent au moins un plot, apte à coopérer avec l'une desdites boutonnières.

7. Siège selon la revendication 6, **caractérisé en ce que** la ou lesdites boutonnières (161₁, 161₂) sont formées par un fil cousu sur un bord du fourreau correspondant.

8. Siège selon la revendication 5, **caractérisé en ce que** lesdites bretelles (13₁, 13₂) sont munies d'un premier et d'un second moyens de verrouillage complémentaires, solidarisant les deux bretelles l'une avec l'autre, et **en ce que** lesdits premier et d'un second moyens de verrouillage forment également lesdits premiers éléments d'accrochage.

9. Siège selon la revendication 8, **caractérisé en ce que** lesdits éléments de verrouillage sont portés par des éléments souples solidarisés chacun à un fourreau porté par une desdites bretelles (13₁, 13₂).

## Patentansprüche

1. Kindersitz zum Einbau in ein Fahrzeug, insbesondere ein Automobil, mit einem Sicherheitsgurtsystem zum Halten des Kindes in der Sitzposition im Kindersitz, der zwei Schultergurte (13₁, 13₂) und ein Teil (14), das zwischen den Beinen liegt, aufweist,
wobei ein Mittel zur Freigabe (16) des besagten Gurtsystems in der Nähe des besagten Teils, welches zwischen den Beinen liegt (14) in einer Öffnung untergebracht ist, die sich an der Oberfläche des besagten Sitzes befindet,
**dadurch gekennzeichnet, dass** die besagte Öffnung durch ein biegsames Element (21) verschlossen wird, das mit den Rändern der besagten Öffnung fest versiegelt ist, wobei das besagte biegsame Element eine vorgefertigte Form aufweist, um eine Stützfläche (212) zu bilden, die mit einem oberen Teil des besagten Mittels zur Freigabe (16) zusammenwirkt.

2. Sitz nach Anspruch 1, **dadurch gekennzeichnet, dass** das besagte biegsame Element (21) an den Rändern der besagten Öffnung geklebt oder eingerastet ist.

3. Sitz nach einem der Ansprüche 1 oder 2, **dadurch gekennzeichnet, dass** jedes der besagten Schultergurte (13) eine Scheide (31) trägt, der mit dem Sitz über ein Rückhalteelement (32) verbunden ist, wobei das besagte Rückhalteelement auf und/oder innerhalb der besagten Scheide (31) verlängert ist, um eine Reibungsschicht zu bilden, die einen Teil der Oberfläche der besagten Scheide abdeckt, die mit dem besagten Kind in Berührung ist.

4. Sitz nach Anspruch 3, **dadurch gekennzeichnet, dass** der Teil (321) des besagten Rückhalteelementes (31), das eine Reibungsschicht bildet, durch Annähen, Kleben und/oder Warmschweißen mit der besagten Scheide (31) verbunden ist.

5. Sitz nach einem der Ansprüche 1 bis 4, **dadurch gekennzeichnet, dass** die besagten Schultergurte (13₁, 13₂) jeweils ein erstes Element zum Einhaken (161₁, 161₂) aufweisen, das jeweils mit einem zweiten, ergänzenden Element zum Einhaken (17₁, 17₂) zusammenwirken kann, wobei die letzteren Elemente mit dem Zweck am Sitz angebracht sind, die besagten Schultergurte voneinander getrennt zu halten, wenn sie nicht benutz werden.

6. Sitz nach Anspruch 5, **dadurch gekennzeichnet, dass** die besagten ersten Elemente zum Einhaken (161₁, 161₂) jeweils mindestens eine Knöpfvorrichtung aufweisen, die auf einer auf dem Schultergurt angebrachten Scheide ausgebildet ist und,
dass die besagten zweiten Elemente zum Einhaken (17₁, 17₂) jeweils mindestens einen Knopfstift aufweisen, der mit einer der besagten Knöpfvorrichtung zusammenwirken.

7. Sitz nach Anspruch 6, **dadurch gekennzeichnet, dass** die besagte Knöpfvorrichtung oder die besagten Knöpfvorrichtungen (161₁, 161₂) von einem Faden gebildet werden, der an den Rand der entsprechenden Scheide genäht ist.

8. Sitz nach Anspruch 5, **dadurch gekennzeichnet, dass** die besagten Schultergurte (13₁, 13₂) ein erstes und ein zweites zusätzliches Verriegelungsmittel aufweisen, wobei diese Verriegelungsmittel die Schultergurte miteinander verbinden und, dass die besagten erste und zweite Verriegelungsmittel ebenfalls die besagten ersten Mittel zum Einhaken bilden.

9. Sitz nach Anspruch 8, **dadurch gekennzeichnet, dass** die besagten Verriegelungselemente durch biegsame Elemente getragen werden, die jeweils mit einer Scheide verbunden sind, die jeweils an einem der besagten Schultergurte (13₁, 13₂) angebracht ist.

## Claims

1. Seat for a child, which is intended to be installed in a vehicle, especially a motor vehicle, and is equipped with a safety harness which is intended to hold a child sitting in the seat and comprises two shoulder straps (13₁, 13₂) and a crotch support (14),
a means (16) for releasing the said harness being provided, in the vicinity of the said crotch support (14), in an opening arranged on the surface of the said seat,
**characterised in that** said opening is closed by a flexible element (21) sealed onto the edges of said opening, said flexible element being pre-formed so as to define a bearing surface (212) cooperating with an upper part of said releasing means (16).

2. Seat according to Claim 1, **characterised in that** said flexible element (21) is glued and/or clipped onto the edges of said opening.

3. Seat according to either of Claims 1 or 2, **characterised in that** each of said shoulder straps (13) carries a sheath (31) which is connected to the seat via a retaining element (32), said retaining element extending over and/or within said sheath (31) so as to form a friction layer covering a part of the surface of said sheath which is in contact with said child.

4. Seat according to Claim 3, **characterised in that** the portion (321) of said retaining element (31) which forms a friction layer is fastened to said sheath (31) by sewing, gluing and/or thermowelding.

5. Seat according to any one of Claims 1 to 4, **characterised in that** said shoulder straps (13₁, 13₂) are each equipped with a first coupling element (161₁, 161₂) which is capable of cooperating with a second complementary coupling element (17₁, 17₂) provided for that purpose on said seat, so as to keep said shoulder straps spaced apart when they are not being used.

6. Seat according to Claim 5, **characterised in that** said first coupling elements (161₁, 161₂) each comprise at least one buttonhole which is formed on a sheath mounted on the shoulder strap,
and **in that** the said second coupling elements (17₁, 17₂) comprise at least one stud which is capable of cooperating with one of said buttonholes.

7. Seat according to Claim 6, **characterised in that** the said buttonhole or buttonholes (161₁, 161₂) is/are formed by a thread which is sewn onto an edge of the corresponding sheath.

8. Seat according to Claim 5, **characterised in that** said shoulder straps (13₁, 13₂) are equipped with a first and a second complementary locking means which fasten the two shoulder straps to one another, and **in that** said first and second locking means also form said first coupling elements.

9. Seat according to Claim 8, **characterised in that** said locking elements are carried by flexible elements which are each fastened to a sheath carried by one of said shoulder straps (13₁, 13₂).
